# EUROPEAN PATENT SPECIFICATION

(11) **EP 1 309 641 B1**
(45) Date of publication and mention of the grant of the patent: **11.01.2006**
(21) Application number: 01903181.4
(22) Date of filing: 19.01.2001
(51) Int. Cl.: C08G 18/08, C08G 18/10, C08G 18/70

(54) **POLYURETHANE DISPERSIONS HAVING IMPROVED SHEAR STABILITY**
POLYURETHANDISPERSIONEN MIT VERBESSERTER SCHERSTABILITÄT
DISPERSIONS DE POLYURETHANNE POSSEDANT UNE STABILITE AU CISAILLEMENT AMELIOREE

(30) Priority: 31.01.2000 US 179190 P
(43) Date of publication of application: 14.05.2003
(73) Proprietor: DOW GLOBAL TECHNOLOGIES INC., Midland, Michigan 48674 (US)
(72) Inventor: KOONCE, William A., Lake Jackson, TX 77566 (US); JAKUBOWSKI, James, J., Midland, MI 48642 (US); BHATTACHARJEE, Debkumar, Lake Jackson, TX 77566 (US)
(74) Representative: Weickmann, Heinrich
(86) International application number: PCT/US2001/001972
(87) International publication number: WO 2001/055237

(56) References cited:
- EP-A- 0 167 188
- WO-A-97/42247
- WO-A-99/23129
- US-A- 4 119 602
- US-A- 5 071 904

## Description

This invention relates to aqueous polyurethane dispersions. This invention particularly relates to aqueous polyurethane dispersions useful for preparing films.

While ostensibly reactive with water, it has long been known that polyisocyanate polymers can be used to prepare aqueous polyurethane dispersions. Polyurethane dispersions are generally prepared by chain extending the reaction product of an organic diisocyanate or polyisocyanate and an organic compound having two or more active hydrogen atoms such as polyalkylene ether glycols, poly(alkylene ether-alkylene thioether) glycols, alkyd resins, polyesters and polyester amides, often using an organic solvent. The diisocyanate is used in stoichiometric excess so that the reaction product, also referred to as a polyurethane/urea/thiourea prepolymer, is isocyanate terminated. Examples of polyurethane prepolymer preparations are described in U.S. Patents Nos. 3,178,310, 3,919,173, 4,442,259, 4,444,976, and 4,742,095, among others.

Polyurethane dispersions are reported as being useful for preparing such diverse materials as: coatings and bonds in U.S. Patent No. 4,292,226; flexible solvent barriers in U.S. Patent No. 4,431,763; adhesives in US Patent No. 4,433,095; and films in 4,501,852. Films, or rather the process of dipping to make a film, can be a part of the processes for making many articles. Examples of film applications include exam gloves, organ bags, condoms, ostomy bags, and the like. While it is known that such applications can be made with polyurethane dispersions, conventional polyurethane dispersions have sometimes been found to have insufficient physical or handling properties to make them a preferred material for such applications. Also, the use of a solvent can have adverse effects for some applications.

Polyurethanes are the reaction product of a polyalcohol and a polyisocyanate. Typically, the polyisocyanates used to prepare polyurethane dispersions have been aliphatic isocyanates such are disclosed in US Patent No. 5,494,960. Aromatic polyisocyanates such as toluene diisocyanate (TDI) and methylene diphenyldiisocydnate (MDI) as well as polymethylene polyphenylisocyanate are also known to be useful.

WO 99/23129 describes a waterborne dispersion of a polyurethane polymer, which is useful as a film having improved properties. The film has properties comparable to rubber, including a percentage elongation greater than 700 %, a tensile strength greater than 3500 psi, a 100 % modulus below 450 psi, a 300 % modulus below 700 psi and a 500 % modulus below 1500 psi. The polymer is useful as a coating for textiles such as back coatings, fabric, or fiber saturants, finishes, or transfer coatings, the film is also useful for gloves, condoms, catheters and the like.

WO 97/42247 A is directed to a coating composition that consists of at least 3 components, component I contains a binder, component II contains at least one nonblocked polyisocyanate as crosslinking agent and component III contains an aqueous dispersion prepared in a single- or multistage method which is a pre-emulsion technique. This coating composition is useful for painting automobile coachwork and plastic components and for repairing automobile paintwork.

EP-A-0 167 188 is directed to a process for preparing aqueous dispersions of acrylic-urethane graft copolymers by using a pre-emulsion technique as well as.other known techniques. The pre-emulsion technique involves emulsifying a monomer charge in water using a surfactant to form a pre-emulsion and then adding the pre-emulsion to a reaction mixture, which contains the remaining reactants.

US-A-5 071 904 describes a waterbome coating composition having a total solids content at application of greater than 30 percent, contains pigment and a dispersion of polymeric microparticles in an aqueous medium. It discloses a pre-emulsion technique comparable to that described above.

US-A-4 119 602 discloses an aqueous dispersion of blocked hydrophilic polyether urethane prepolymer, codispersions of this prepolymer with synthetic polymer latices and methods of preparing the dispersions as well as polyurethane coatings and films prepared therewith. The prepolymer is cationically or anionically stabilized, wherein the isocyanate groups are blocked by formation of a condensation product with an oxime. The blocked prepolymer is admixed with a synthetic polymer latex to form an aqueous codispersion.

Conventional processes of preparing films from dispersions, including polyurethane dispersions, generally include a step of coagulating the dispersion onto a substrate. It is therefore necessary that dispersions used to make films have the property that they can be coagulated onto a substrate. At the same time, it is considered desirable in the art of making polymer dispersions that the dispersions be stable, that is that they do not settle or spontaneously coagulate during shipping on storage. Accordingly, it would be desirable in the art of preparing aqueous dispersions useful for preparing films that the dispersions be capable of being coagulated onto a substrate using conventional coagulants and coagulation technology. It would also be desirable in the art to prepare such dispersions which have enhanced shear stability. It would be particularly desirable to prepare films with such dispersions which also can be prepared in the absence of organic solvents.

In one aspect, the present invention is a process for preparing a polyurethane dispersion having enhanced shear stability, the process comprising:
(a) dispersing a nonionic polyurethane prepolymer and a first external surfactant in water to prepare an aqueous polyurethane dispersion, the prepolymer being prepared from a diisocyanate and an active hydrogen containing material and the first surfactant comprising an anionic surfactant; and
(b) admixing the aqueous dispersion with a second external surfactant to prepare an admixed dispersion, the admixed dispersion having enhanced shear stability as compared to the aqueous dispersion, and the second surfactant being anionic and different from the first surfactant.

In another aspect, the present invention is a polyurethane film prepared by the process comprising:
(a) dispersing a nonionic polyurethane prepolymer and a first external surfactant in water to prepare an aqueous polyurethane dispersion, the prepolymer being prepared from a diisocyanate and an active hydrogen containing material and the first surfactant comprising an anionic surfactant; and
(b) admixing the first dispersion with a second external surfactant to prepare an admixed dispersion, the admixed dispersion having enhanced shear stability as compared to the aqueous dispersion, and the second surfactant being anionic and different from the first surfactant; and
(c) applying the admixed dispersion to a substrate to form a film.

In still another aspect, the present invention is a polyurethane dispersion having enhanced shear stability, the dispersion comprising:
(a) a nonionic polyurethane prepolymer and a first external surfactant dispersed in water, the prepolymer being prepared from a diisocyanate and an active hydrogen containing material and the first surfactant comprising an anionic surfactant; and
(b) a post-added second external surfactant, said second surfactant being anionic and different from said first surfactant,

wherein the polyurethane dispersion has enhanced shear stability as compared to a dispersion having component (a) but not having a post-added second external surfactant.

In a further aspect, the present invention is a polyurethane dispersion having enhanced shear stability, the dispersion consisting essentially of
(a) a nonionic polyurethane prepolymer and a first external surfactant dispersed in water, the prepolymer being prepared from a diisocyanate and an active hydrogen containing material and the first surfactant comprising an anionic surfactant; and
(b) a post-added second external surfactant, said second surfactant being different from said first surfactant, wherein the polyurethane dispersion has enhanced shear stability as compared to a dispersion having component (a) but not having a post-added second external surfactant.

A polyurethane dispersion prepared using a two step addition of different surfactants has greater shear stability than a similar dispersion prepared using only a single surfactant or a single step addition of surfactants. The dispersions of the present invention have the advantage of providing enhanced shear stability, while still being useful for the end use application. In other words, the dispersions of the present invention can be coagulated without having negative impact on film processing or the resulting film properties. The dispersions and films of the present invention have applicability in a variety of end use applications such as, for example, gloves, condoms, angioplasty balloons, medical bags, medical tubing, or catheters.

The polyurethane prepolymer dispersions of the present invention are prepared by a two step process of dispersing a polyurethane prepolymer in water using a first external surfactant and then admixing the resulting dispersion of the first step with a second and different external surfactant. The product of the second step is a polyurethane dispersion useful for preparing films but also one having more shear stability than a dispersion prepared using a single surfactant or mixtures of surfactants in a single step. "Shear stability" is defined as meaning that the dispersion maintains its particle size and usefulness for its end use application when exposed to shear, for example, during pumping, agitation or other movement of the fluid. "Enhanced shear stability" means that the dispersions of the present invention have a shear stability that is enhanced as compared to dispersions prepared using only a single surfactant or a single step addition of surfactants. For purposes of the present invention, the phrase "useful for preparing films" means that while the dispersions are sufficiently stable to be stored, they are not so stable that they cannot be electrodeposited or coagulated onto a substrate to make a film or other dispersion derived product.

The dispersions of the first step of the present invention can be prepared in any way which results in a dispersion which can be used to prepare a film having acceptable physical properties for the anticipated use of the film. The dispersions can be prepared by a batch process or by a continuous process. If prepared by a batch process, preferably the dispersion is prepared by an inverse phase process wherein a small amount of water, including a small amount of anionic surfactant, is first added to a continuous prepolymer phase and mixed and then more water is added with mixing until the phase inverts.

When dispersions of the first step of the process of the present invention are prepared by means of a continuous process, preferably they are prepared by means of a high internal phase ratio (HIPR) process. Such processes are known and are disclosed in, for Example, U.S. Patent No. 5,539,021 to Pate, et al., and WO 98/41552 A1 to Jakubowski, et al. Other continuous dispersion processes can be used with the first step of the process of the present invention with the proviso that they result in a stable dispersion or at least a dispersion which is sufficiently dispersed to be further processed in the second step and result in a stable dispersion. For purposes of the present invention, a dispersion is stable if it does not settle or separate out too quickly to be useful for its intended purpose.

In the second step of the process of the present invention, the dispersion from the first step is admixed with a different external surfactant and admixed. The admixture of the second step may be prepared by any method which results in a stable polyurethane dispersion. The product of the second step of the process of the present invention, irrespective of admixing methods used, should have a particle size sufficient to make the dispersion stable. The dispersions of the present invention will have a particle size of from 0.9 to 0.05, preferably from 0.5 to 0.07 and even more preferably, from 0.4 to 0.10 microns.

The first surfactant is utilized for the purpose of stabilizing the particles in the desirable particle size range, whereas the second surfactant is used to enhance the shear stability. Surprisingly, if the first and second surfactant are added at the same time, adequate stability is not achieved, whereas when the first and second surfactant are added in a stepwise fashion, the desired particle size is achieved, as is the enhanced shear stability. Likewise, if only a single surfactant is used, even in greater amounts, enhanced shear stability is not achieved.

The polyurethane dispersions of the present invention are prepared from a nonionic polyurethane prepolymer. The nonionic prepolymers useful with the present invention are prepared with an aromatic diisocyanate selected from the group consisting of MDI, TDI and mixtures thereof. TDI can be generally used with any commonly available isomer distribution. The most commonly available TDI has an isomer distribution of 80 percent of the 2,4 isomer and 20 percent of the 2,6 isomer. For the purposes of the present invention, TDI with other isomer distributions can also be used, but such isocyanates are often available only at a significantly higher cost.

When MDI is used with the formulations of the present invention, it preferably has a P,P' isomer content of from 99 weight percent to 50 weight percent. Even more preferably, when MDI is used with the formulations of the present invention, it preferably has a P,P' isomer content of from 98 to 92 weight percent. Most preferably, when MDI is used with the formulations of the present invention, it preferably has a P,P' isomer content of about 94 weight percent. While MDI with such isomer distributions can be prepared by distillation during the MDI process, it can also be prepared by admixing commonly available products such as ISONATE 125M* and ISONATE 500P*. (*ISONATE 125M and ISONATE 50OP are trade designations of The Dow Chemical Company.)

When mixtures of TDI and MDI are used to prepare the prepolymers useful with the present invention, they are admixed in a ratio of MDI to TDI of from 99 weight percent MDI to 1 weight percent MDI. More preferably, when mixtures of TDI and MDI are used to prepare the prepolymers useful with the present invention, they are admixed in a ratio of MDI to TDI of from 95 weight percent MDI to 40 weight percent MDI. Most preferably, when mixtures of TDI and MDI are used to prepare the prepolymers useful with the present invention, they are admixed in a ratio of MDI to TDI of 75 weight percent MDI to 50 weight percent MDI. Preferably the prepolymers useful with the present invention are prepared with MDI or mixtures of MDI and TDI. Even more preferably, the prepolymers useful with the present invention are prepared with MDI as the only aromatic diisocyanate.

In one embodiment of the present invention, the prepolymers useful with the present invention are prepared from a formulation that includes an active hydrogen containing material. In a preferred embodiment of the present invention, the active hydrogen containing material is a mixture of diols. One component of the diol mixture is a high molecular weight polyoxypropylene diol having an ethylene oxide capping of from 0 to 25 weight percent. The other component of the diol mixture is a low molecular weight diol. The polyether diols of the formulations of the present invention can be prepared by any method known to those of ordinary skill in the art of preparing polyether polyols to be useful for preparing such diols. Preferably, the polyether diols are prepared by the alkoxylation of a difunctional initiator in the presence of a basic catalyst. For example, a polyether useful with the present invention is a product resulting from a two step alkoxylation of ethylene glycol with first propylene oxide and then ethylene oxide, in the presence of KOH as a catalyst.

The low molecular weight diol component of some of the prepolymer formulations of the present invention can also be a product of alkoxylating a difunctional initiator. Preferably, this component is also a polyoxypropylene diol, but it can also be a mixed ethylene oxide propylene oxide polyol, as long as at least 75 weight percent of the alkoxides used, if present, is propylene oxide. Diols such as propylene glycol, diethylene glycol, dipropylene glycol, and the like, can also be used with the formulations of the present invention. The low molecular weight diol component of the prepolymer formulations, if present, has a molecular weight of from 60 to 750, preferably from 62 to 600, and most preferably, from 125 to 500.

The prepolymers useful with the present invention can be prepared in any way known to those of ordinary skill in the art of preparing polyurethane prepolymers to useful for preparing such prepolymers. Preferably the aromatic diisocyanate and polyether diol mixture are brought together and heated under reaction conditions sufficient to prepare a polyurethane prepolymer. The stoichiometry of the prepolymer formulations of the present invention is such that the diisocyanate is present in excess. Preferably, the prepolymers useful with the present invention have an isocyanate content (also known as percent NCO) of from about 1 to about 9 weight percent, more preferably from 2 to 8 weight percent, and most preferably from 3 to 7 weight percent.

The prepolymers useful with the present invention are optionally extended, sometimes using a difunctional amine chain extender when the active hydrogen containing material of the prepolymer formulation is a mixture of a low molecular weight diol and a high molecular weight polyether diol. The difunctional amine chain extender may not be optional, but rather be required when the active hydrogen containing material of the prepolymer formulation is a high molecular weight polyether diol and does not include a low molecular weight diol. Preferably, the difunctional amine chain extender, if present, is present in the water used to make the dispersion. When used, the amine chain extender can be any isocyanate reactive diamine or amine having another isocyanate reactive group and a molecular weight of from 60 to 450, but is preferably selected from the group consisting of: an aminated polyether diols; piperazine, aminoethylethanolanune, ethanolamine, ethylenediamine and mixtures thereof. Preferably, the amine chain extender is dissolved in the water used to make the dispersion.

The prepolymers useful with the present invention are nonionic. In the prepolymers, there are no ionic groups incorporated in or attached to the backbones of the prepolymers used to prepare the films of the present invention. The anionic surfactant used to prepare the dispersions of the present invention is a external stabilizer and is not incorporated into the polymer backbones of the films of the present invention.

The prepolymers useful with the present invention are, in a first step, dispersed in water which contains a first surfactant. The surfactant is an anionic surfactant. In the practice of preparing the dispersions of the present invention, the first surfactant is preferably introduced into water prior to a prepolymer being dispersed therein, but it is not outside the scope of the present invention that the first surfactant and prepolymer could be introduced into the water at the same time. Any anionic surfactant can be used as the first surfactant with the present invention, but preferably the first surfactant is selected from the group consisting of sulfonates, sulfates, phosphates, and carboxylates. More preferably, the first surfactant is sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, triethanolamine lauryl sulfate, or sodium hexyl diphenyl oxide disulfonate, and most preferably, the first anionic surfactant is sodium dodecyl benzene sulfonate.

In the practice of the process of the present invention, in a second step, a polyurethane dispersion prepared with a first external surfactant is admixed with a second and different external surfactant. Preferably, the second surfactant is an anionic surfactant. Any anionic surfactant can be used as the second surfactant with the present invention, but preferably the second surfactant is selected from the group consisting of sulfonates, sulfates, phosphates, and carboxylates. More preferably, the second surfactant is sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, triethanolamine lauryl sulfate, or sodium hexyl diphenyl oxide disulfonate, and most preferably, the second anionic surfactant is triethanolamine lauryl sulfate. Other external surfactants can also be used in the second step of the process of the present invention with the proviso that they are different from the surfactant of the first step.

The second surfactant is post-added. In other words, the second surfactant is not added until after the polyurethane dispersion prepared with the first external surfactant reaches the desired particle size.

The dispersions of the present invention can have a solids level of from 30 weight percent to 60 weight percent. Films will not necessarily be prepared from dispersions having this level of solids. While the dispersions themselves will be stored and shipped at as high a solids content as possible to minimize storage volume and shipping costs, the dispersions can desirably be diluted prior to final use. The thickness of the film to be prepared and the method of coagulating the polymer onto a substrate will usually dictate what solids level is needed in the dispersion. When preparing films, the dispersions of the present invention can be at a weight percent solids of from 5 to 60 percent, preferably from 10 to 40 percent, and, most preferably, from 15 to 25 weight percent when preparing examination gloves. For other applications, the film thickness and corresponding solids content of the dispersion used can vary.

The polyurethane dispersions of the present invention can be prepared by including in the prepolymer formulation other materials. For example, the polyurethane dispersions of the present invention can be prepared by including a monol in the prepolymer. When present, preferably the monol is a polyether and more preferably is a polyoxyethylene polyether monol. Preferably the monol has a molecular weight of from 500 to 1500, and more preferably from 800 to 1200. Preferably the monol is included in the prepolymer formulation at a concentration of from 0.1 to 0.99 percent by weight. Too much monol in the prepolymer will result in a dispersion which can not be coagulated using conventional coagulation technology such as calcium nitrate and the like.

Other materials besides monols can also be included in the polyurethane dispersion formulations of the present invention. For example, films prepared using dispersion of the present invention can be prepared such that they are self-releasing. In the art of preparing exam gloves, this ability is also known as "powder free" in reference to the fact that such gloves are occasionally prepared and sold with a layer of talcum powder, corn starch, or the like, to keep the polymer from adhering to itself, thereby making it easier to put on the gloves. The films of the present invention can be made self releasing by inclusion of a wax in the prepolymer formulation. In one embodiment, the wax is added as an emulsion to a dispersion. Preferably the wax is carnauba wax and the like. It is preferable that the wax to be used be selected from those that are not likely to induce an allergic reaction in skin that comes in contact therewith. Therefore, food grade waxes are particularly preferred for this application. When used, the waxes are preferably included in the water used to disperse the prepolymer formulation at a concentration of from 0.1 to 2 weight percent. Even more preferably, the waxes are added to a fully prepared dispersion.

Any additive which is known to those of ordinary skill in the art of preparing films from dispersions to be useful can be used with the process of the present invention so long as their presence does not degrade the properties of the dispersions or films prepared therewith so much that the films are no longer fit for their intended purposes. The additives can also be incorporated into the formulations or films in any way known to be useful including, but not limited to inclusion in the prepolymer formulation and inclusion in the water used to make the dispersion. For example titanium dioxide is useful for coloring films of the present invention. Other useful additives include calcium carbonate, silicon oxide, defoamers, biocides, carbon particles, and the like.

Films may be prepared by applying the dispersions of the present invention to a substrate. Methods for applying the dispersions to a substrate include dipping, thermal coagulation, casting, electrodeposition, or a combination thereof.

The following examples are for illustrative purposes only and are not intended to limit the scope of the claimed invention. Percentages are in weight percents unless otherwise stated.

### EXAMPLES

The following materials are used in the examples below:
Polyether Polyol is a 2000 molecular weight polyoxypropylene diol having 12.5 percent ethylene oxide end capping.
Low Molecular Weight Diol is a 425 molecular weight all polyoxypropylene diol.
Polyisocyanate I is MDI having a 4,4' isomer content of 98 percent and an isocyanate equivalent weight of 125.
Polyisocyanate II is MDI having a 4,4' isomer content of 50 percent and an isocyanate equivalent weight of 125.
Surfactant I is triethanolamine lauryl sulfate.
Surfactant II is sodium dodecyl benzene sulfonate.
Surfactant III is ammonium lauryl sulfate.
Surfactant IV is sodium lauryl sulfate.
Surfactant V is triethanolamine lauryl sarcosinate.
Surfactant VI is triethanolamine dodecylbenzene sulfonate.

### EXAMPLE 1

A polyurethane prepolymer is prepared by admixing 23.4 parts of Polyether Polyol and 6.6 parts of Low Molecular Weight Diol and then heating the admixture to 50°C. This material is then admixed with 13.1 parts of Polyisocyanate I and 1.9 parts Polyisocyanate II which has also been warmed to 50°C. A small amount of benzoyl chloride is added to neutralize residual base in the polyols. The admixture is then heated at 70°C for 4 hours.

A polyurethane dispersion is prepared by admixing the prepolymer and 1.4 parts Surfactant II using a high shear mixer running at about 2500 rpm. Water is slowly added until a phase inversion is observed. Then additional water added to bring the total water content to 53.6 parts.

The polyurethane dispersion is then further treated by adding an additional 0.4 parts of Surfactant I and stirring.

The polyurethane dispersion is tested for shear stability by diluting the dispersion with water to a solids content of 40 percent and then stirring the dispersion using a high shear mixer running at 2000 rpm. The dispersion is observed for 30 minutes or until the dispersion thickened and formed a solid. The observation is recorded below in Table 1.

### EXAMPLES 2-5

Examples 2-5 are prepared and tested substantially identically to Example 1 except that the surfactants indicated in Table 1 are used instead of Surfactant I.

### COMPARATIVE EXAMPLE 6

Comparative Example 6 is prepared and tested substantially identically to Example 1 except that no second surfactant is used.

**Table 1**

| Example No. | Second Surfactant Used | Time to thicken | Time to solidification |
|---|---|---|---|
| 1 | Surfactant I | Did not thicken in 1800 seconds | Did not thicken in 1800 seconds |
| 2 | Surfactant III | 650 | 705 |
| 3 | Surfactant IV | 765 | 830 |
| 4 | Surfactant V | 930 | 1050 |
| 5 | Surfactant VI | 1330 | 1405 |
| Comp. 6 | none | 350 | 402 |

### COMPARATIVE EXAMPLES 7-10

A polyurethane prepolymer is prepared according to the process described above for Example 1.

A polyurethane dispersion is prepared by admixing the prepolymer and the surfactant mixture described in Table 2 below, using a high shear mixer running at 2500 rpm. For all of these comparative examples, a stepwise addition of surfactants is not used. Water is slowly added until a phase inversion is observed. The additional water is added to bring the total water content to 53.6 parts.

**Table 2**

| Example | Surfactant used (parts by weight) | Particle size (microns) | Distribution | Stability |
|---|---|---|---|---|
| Comp. 7 | 1.4 Surfactant II only | 0.447 | Monomodal | No settling |
| Comp. 8 | 1.4 Surfactant I only | 2.079 | Bimodal | Rapid settling |
| Comp. 9 | 1.9 Surfactant I only | 1.837 | Bimodal | Rapid settling |
| Comp. 10 | 1.0 Surfactant II 1.0 Surfactant I (added simultaneously) | 1.740 | Bimodal | Rapid settling |

## Claims

1. A process for preparing a polyurethane dispersion having enhanced shear stability, the process comprising:
(a) dispersing a nonionic polyurethane prepolymer and a first external surfactant in water to prepare an aqueous polyurethane dispersion, the prepolymer being prepared from a diisocyanate and an active hydrogen containing material and the first surfactant comprising an anionic surfactant; and
(b) admixing the aqueous dispersion with a second external surfactant to prepare an admixed dispersion, the admixed dispersion having enhanced shear stability as compared to the aqueous dispersion, and the second surfactant being anionic and different from the first surfactant.

2. The process according to claim 1, wherein the first and second surfactant is are selected from the group consisting of sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, triethanolamine lauryl sulfate, or sodium hexyl diphenyl oxide disulfonate.

3. The process according to claim 1 or 2, wherein the admixed dispersion has a particle size of from 0.9 microns to 0.05 microns.

4. The process according to one of the preceding claims 1 to 3, wherein the admixed dispersion has a solids content of from 5 to 60 weight percent.

5. The process according to one of the preceding claims 1 to 4, wherein the prepolymer is prepared from a diisocyanate comprising MDI, TDI, or mixtures of MDI and TDI,

6. The process according to one of the preceding claims 1 to 5, wherein the prepolymer is prepared from an active hydrogen containing material comprising either:
(a) a mixture of a high molecular weight diol and a low molecular weight diol; or
(b) a high molecular weight diol,
with the proviso that when the active hydrogen containing material does not include a low molecular weight diol, the prepolymer is dispersed in water which includes a difunctional amine chain extender.

7. A polyurethane film prepared by the process comprising:
(a) dispersing a nonionic polyurethane prepolymer and a first external surfactant in water to prepare an aqueous polyurethane dispersion, the prepolymer being prepared from a diisocyanate and an active hydrogen containing material and the first surfactant comprising an anionic surfactant; and
(b) admixing the first dispersion with a second external surfactant to prepare an admixed dispersion, the admixed dispersion having enhanced shear stability as compared to the aqueous dispersion, and the second surfactant being anionic and different from the first surfactant; and
(c) applying the admixed dispersion to a substrate to form a film.

8. The film according to claim 7, wherein the first and second surfactant is are selected from the group consisting of sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, triethanolamine lauryl sulfate, or sodium hexyl diphenyl oxide disulfonate.

9. The film according to claim 7, wherein step (c) of the process for preparing the film comprises dipping the substrate into the admixed dispersion, thermally coagulating, casting, or electrodepositing the dispersion onto the substrate, or a combination thereof.

10. The polyurethane film according to one of the preceding claims 7 to 9, wherein the resulting film is in the shape of a glove, condom, angioplasty balloon, medical bag, medical tubing, or catheter.

11. A polyurethane dispersion having enhanced shear stability, the dispersion comprising:
(a) a nonionic polyurethane prepolymer and a first external surfactant dispersed in water, the prepolymer being prepared from a diisocyanate and an active hydrogen containing material and the first surfactant comprising an anionic surfactant; and
(b) a post-added second external surfactant, said second surfactant being anionic and different from said first surfactant,
wherein the polyurethane dispersion has enhanced shear stability as compared to a dispersion having component (a) but not having a post-added second external surfactant.

12. The polyurethane dispersion according to claim 11, wherein the first and second surfactants are selected from the group consisting of sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, triethanolamine lauryl sulfate, or sodium hexyl diphenyl oxide disulfonate.

13. The polyurethane dispersion according to claim 11 or 12, wherein the dispersion has a particle size of from 0.9 microns to 0.05 microns.

14. The polyurethane dispersion according to one of the preceding claims 11 to 13, wherein the dispersion has a solids content of 5 to 60 weight percent.

15. The polyurethane dispersion according to one of the preceding claims 11 to 14, wherein the prepolymer is prepared from a diisocyanate comprising MDI, TDI, or mixtures of MDI and TDI.

16. The polyurethane dispersion according to one of the preceding claims 11 to 15, wherein the prepolymer is prepared from an active hydrogen containing material comprising either:
(a) a mixture of a high molecular weight diol and a low molecular weight diol; or
(b) a high molecular weight diol,
with the proviso that when the active hydrogen containing material does not include a low molecular weight diol, the prepolymer is dispersed in water which includes a difunctional amine chain extender.

17. The polyurethane dispersion according to one of the preceding claims 11 to 16, wherein the dispersion is coagulatable onto a substrate.

18. The polyurethane dispersion according to claim 16, wherein the prepolymer is prepared from a high molecular weight diol comprising a polyoxypropylene diol having an ethylene oxide capping of from 0 to 25 weight percent and a difunctional amine chain extender comprising at least one of an aminated polyether diol, piperazine, amino ethylethanolamine, ethanolamine, and ethylenediamine.

19. The polyurethane dispersion according to claim 16, wherein the prepolymer is prepared from a high molecular weight diol comprising a polyoxypropylene diol having an ethylene oxide capping of from 0 to 25 weight percent and a low molecular weight diol comprising at least one of a polyoxypropylene diol, propylene glycol, and diethylene glycol.

20. The polyurethane dispersion according to one of the preceding claims 11 to 19, wherein the prepolymer is further prepared from a polyether monol, the monol being included in the prepolymer in an amount of from 0.1 to 0.99 percent by weight.

21. A polyurethane dispersion having enhanced shear stability, the dispersion consisting essentially of
(a) a nonionic polyurethane prepolymer and a first external surfactant dispersed in water, the prepolymer being prepared from a diisocyanate and an active hydrogen containing material and the first surfactant comprising an anionic surfactant; and
(b) a post-added second external surfactant, said second surfactant being different from said first surfactant, wherein the polyurethane dispersion has enhanced shear stability as compared to a dispersion having component (a) but not having a post-added second external surfactant.

## Patentansprüche

1. Verfahren zum Herstellen einer Polyurethandispersion mit verbesserter Scherstabilität, wobei das Verfahren umfasst:
(a) Dispergieren eines nicht-ionischen Polyurethanpräpolymers und eines ersten externen oberflächenaktiven Mittels in Wasser, um eine wässrige Polyurethandispersion herzustellen, wobei das Präpolymer hergestellt wird aus einem Diisocyanat und einem aktiven Wasserstoff enthaltenden Material und das erste oberflächenaktive Mittel ein anionisches oberflächenaktives Mittel umfasst; und
(b) Mischen der wässrigen Dispersion mit einem zweiten externen oberflächenaktiven Mittel, um eine gemischte Dispersion herzustellen, wobei die gemischte Dispersion verbesserte Scherstabilität im Vergleich mit der wässrigen Dispersion aufweist, und das zweite oberflächenaktive Mittel anionisch und verschieden von dem ersten oberflächenaktiven Mittel ist.

2. Verfahren nach Anspruch 1, worin das erste und zweite oberflächenaktive Mittel ausgewählt wird aus der Gruppe, bestehend aus Natriumdodecylbenzolsulfonat, Natriumdodecylsulfonat, Natriumdodecyldiphenyloxiddisulfonat, Natrium-n-decyldiphenyloxiddisulfonat, Isopropylamindodecylbenzolsulfonat, Triethanolaminlaurylsulfat oder Natriumhexyldiphenyloxiddisulfonat.

3. Verfahren nach Anspruch 1 oder 2, worin die gemischte Dispersion eine Teilchengröße von 0,9 Mikrometer bis 0,05 Mikrometer aufweist.

4. Verfahren nach einem der vorhergehenden Ansprüche 1 bis 3, worin die gemischte Dispersion einen Feststoffgehalt von 5 bis 60 Gewichtsprozent aufweist.

5. Verfahren nach einem der vorhergehenden Ansprüche 1 bis 4, worin das Präpolymer hergestellt wird aus einem Diisocyanat, umfassend MDI, TDI oder Gemischen von MDI und TDI.

6. Verfahren nach einem der vorhergehenden Ansprüche 1 bis 5, worin das Präpolymer hergestellt wird aus einem aktiven Wasserstoff enthaltenden Material, umfassend entweder:
(a) ein Gemisch aus einem Diol mit hohem Molekulargewicht und einem Diol mit niederem Molekulargewicht; oder
(b) ein Diol mit hohem Molekulargewicht, mit der Maßgabe, dass, wenn das aktiven Wasserstoff enthaltende Material kein Diol mit niederem Molekulargewicht umfasst, das Präpolymer in Wasser dispergiert wird, das einen difunktionellen Aminkettenverlängerer umfasst.

7. Polyurethanfolie, hergestellt durch das Verfahren, umfassend:
(a) Dispergieren eines nicht-ionischen Polyurethanpräpolymers und eines ersten externen oberflächenaktiven Mittels in Wasser, um eine wässrige Polyurethandispersion herzustellen, wobei das Präpolymer hergestellt wird aus einem Diisocyanat und einem aktiven Wasserstoff enthaltenden Material und das erste oberflächenaktive Mittel ein anionisches oberflächenaktives Mittel umfasst; und
(b) Mischen der ersten Dispersion mit einem zweiten externen oberflächenaktiven Mittel, um eine gemischte Dispersion herzustellen, wobei die gemischte Dispersion im Vergleich mit der wässrigen Dispersion verbesserte Scherstabilität aufweist und das zweite oberflächenaktive Mittel anionisch und verschieden von dem ersten oberflächenaktiven Mittel ist; und
(c) Aufbringen der gemischten Dispersion auf ein Substrat, um eine Folie zu bilden.

8. Folie nach Anspruch 7, worin das erste und zweite oberflächenaktive Mittel ausgewählt werden aus der Gruppe, bestehend aus Natriumdodecylbenzolsulfonat, Natriumdodecylsulfonat, Natriumdodecyldiphenyloxiddisulfonat, Natrium-n-decyldiphenyloxiddisulfonat, Isopropylamindodecylbenzolsulfonat, Triethanolaminlaurylsulfat oder Natriumhexyldiphenyloxiddisulfonat.

9. Folie nach Anspruch 7, worin Schritt (c) des Verfahrens zum Herstellen der Folie das Eintauchen des Substrats in die gemischte Dispersion, thermisches Koagulieren, Gießen oder Elektroabscheiden der Dispersion auf dem Substrat oder eine Kombination davon umfasst.

10. Polyurethanfolie nach einem der vorhergehenden Ansprüche 7 bis 9, worin die resultierende Folie in der Form eines Handschuhs, Kondoms, angioplastischen Ballons, medizinischen Beutels, medizinischen Schlauchs oder Katheters ist.

11. Polyurethandispersion mit verbesserter Scherstabilität, wobei die Dispersion umfasst:
(a) ein nicht-ionisches Polyurethanpräpolymer und ein erstes externes oberflächenaktives Mittel, dispergiert in Wasser, wobei das Präpolymer hergestellt ist aus einem Diisocyanat und einem aktiven Wasserstoff enthaltenden Material und das erste oberflächenaktive Mittel ein anionisches oberflächenaktives Mittel umfasst; und
(b) ein nachträglich zugegebenes zweites externes oberflächenaktives Mittel, wobei das zweite oberflächenaktive Mittel anionisch ist und verschieden von dem ersten oberflächenaktiven Mittel ist,
worin die Polyurethandispersion verbesserte Scherstabilität im Vergleich mit einer Dispersion aufweist, die Komponente (a), jedoch kein nachträglich zugegebenes zweites externes oberflächenaktives Mittel aufweist.

12. Polyurethandispersion nach Anspruch 11, worin die ersten und zweiten oberflächenaktiven Mittel ausgewählt sind aus der Gruppe, bestehend aus Natriumdodecylbenzolsulfonat, Natriumdodecylsulfonat, Natriumdodecyldiphenyloxiddisulfonat, Natrium-n-decyldiphenyloxiddisulfonat, Isopropylamindodecylbenzolsulfonat, Triethanolaminlaurylsulfat oder Natriumhexyldiphenyloxiddisulfonat.

13. Polyurethandispersion nach Anspruch 11 oder 12, worin die Dispersion eine Teilchengröße von 0,9 Mikrometer bis 0,05 Mikrometer aufweist.

14. Polyurethandispersion nach einem der vorhergehenden Ansprüche 11 bis 13, worin die Dispersion einen Feststoffgehalt von 5 bis 60 Gewichtsprozent aufweist.

15. Polurethandispersion nach einem der vorhergehenden Ansprüche 11 bis 14, worin das Präpolymer hergestellt ist aus einem Diisocyanat, umfassend MDI, TDI oder Gemische von MDI und TDI.

16. Polyurethandispersion nach einem der vorhergehenden Ansprüche 11 bis 15, worin das Präpolymer hergestellt ist aus einem aktiven Wasserstoff enthaltendem Material, umfassend entweder:
(a) ein Gemisch aus einem Diol mit hohem Molekulargewicht und einem Diol mit niederem Molekulargewicht; oder
(b) ein Diol mit hohem Molekulargewicht, mit der Maßgabe, dass, wenn das aktiven Wasserstoff enthaltende Material kein Diol mit niederem Molekulargewicht umfasst, das Präpolymer dispergiert ist in Wasser, das einen difunktionellen Aminkettenverlängerer enthält.

17. Polyurethandispersion nach einem der vorhergehenden Ansprüche 11 bis 16, worin die Dispersion auf einem Substrat koagluierbar ist.

18. Polyurethandispersion nach Anspruch 16, worin das Präpolymer hergestellt ist aus einem Diol mit hohem Molekulargewicht, umfassend ein Polyoxypropylendiol mit einem Ethylenoxidcapping von 0 bis 25 Gewichtsprozent und einem difunktionellem Aminkettenverlängerer, umfassend mindestens eines aus einem aminierten Polyetherdiol, Piperazin, Aminoethylethanolamin, Ethanolamin und Ethylendiamin.

19. Polyurethandispersion nach Anspruch 16, worin das Präpolymer hergestellt ist aus einem Diol mit hohem Molekulargewicht, umfassend ein Polyoxypropylendiol mit einem Ethylenoxidcapping von 0 bis 25 Gewichtsprozent und einem Diol mit niederem Molekulargewicht, umfassend mindestens eines aus einem Polyoxypropylendiol, Propylenglykol und Diethylenglykol.

20. Polyurethandispersion nach einem der vorhergehenden Ansprüche 11 bis 19, worin das Präpolymer weiterhin hergestellt ist aus einem Polyethermonol, wobei das Monol in dem Präpolymer in einer Menge von 0,1 bis 0,99 Gewichtsprozent enthalten ist.

21. Polyurethandispersion mit verbesserter Scherstabilität, wobei die Dispersion im Wesentlichen besteht aus
(a) einem nicht-ionischen Polyurethanpräpolymer und einem ersten externen oberflächenaktiven Mittel, dispergiert in Wasser, wobei das Präpolymer hergestellt ist aus einem Diisocyanat und einem aktiven Wasserstoff enthaltenden Material und worin das erste oberflächenaktive Mittel ein anionisches oberflächenaktives Mittel umfasst; und
(b) einem nachträglich zugegebenen zweiten externen oberflächenaktiven Mittel, wobei das zweite oberflächenaktive Mittel verschieden von dem ersten oberflächenaktiven Mittel ist, worin die Polyurethandispersion verbesserte Scherstabilität im Vergleich mit einer Dispersion aufweist, die Komponente (a) enthält, jedoch kein nachträglich zugegebenes zweites externes oberflächenaktives Mittel aufweist.

## Revendications

1. Procédé de préparation d'une dispersion de polyuréthane possédant une stabilité au cisaillement améliorée, le procédé comprenant :
(a) la dispersion d'un prépolymère non ionique de polyuréthane et d'un premier tensioactif externe dans de l'eau afin de préparer une dispersion aqueuse de polyuréthane, le prépolymère étant préparé à partir d'un diisocyanate et d'un matériau contenant de l'hydrogène actif et le premier tensioactif comprenant un tensioactif anionique ; et
(b) le mélange de la dispersion aqueuse avec un second tensioactif externe afin de préparer une dispersion mélangée, la dispersion mélangée possédant une stabilité au cisaillement améliorée comparativement à la dispersion aqueuse et le second tensioactif étant anionique et différent du premier tensioactif.

2. Procédé selon la revendication 1, dans lequel le premier et le second tensioactifs sont choisis dans le groupe constitué par le dodécylbenzène sulfonate de sodium, le dodécyl sulfonate de sodium, l'(oxyde de dodécyle et de diphényle)disulfonate de sodium, l'(oxyde de n-décyle et de diphényle)disulfonate de sodium, le dodécylbenzènesulfonate d'isopropylamine, le laurylsulfate de triéthanolamine ou l'(oxyde d'hexyle et de diphényle)disulfonate de sodium.

3. Procédé selon la revendication 1 ou 2, dans lequel la dispersion mélangée a une granulométrie de 0,9 micron à 0,05 micron.

4. Procédé selon l'une des revendications précédentes 1 à 3, dans lequel la dispersion mélangée a une teneur en substances solides de 5 à 60 pour cent en poids.

5. Procédé selon l'une des revendications précédentes 1 à 4, dans lequel le prépolymère est préparé à partir d'un diisocyanate comprenant du méthylène-diphénylisocyanate, du toluène-diisocyanate ou des mélanges de méthylène-diphénylisocyanate et de toluène-diisocyanate.

6. Procédé selon l'une des revendications précédentes 1 à 5, dans lequel le prépolymère est préparé à partir d'un matériau contenant de l'hydrogène actif comprenant soit :
(a) un mélange d'un diol de poids moléculaire élevé et d'un diol de faible poids moléculaire ; soit
(b) un diol de poids moléculaire élevé,
à la condition que, si le matériau contenant de l'hydrogène actif ne comprend pas un diol de faible poids moléculaire, le prépolymère est dispersé dans de l'eau qui comprend un extenseur de chaîne de type amine difonctionnel.

7. Film en polyuréthane préparé par le procédé comprenant :
a) la dispersion d'un prépolymère non ionique de polyuréthane et d'un premier tensioactif externe dans de l'eau afin de préparer une dispersion aqueuse de polyuréthane, le prépolymère étant préparé à partir d'un diisocyanate et d'un matériau contenant de l'hydrogène actif et le premier tensioactif comprenant un tensioactif anionique ; et
(b) le mélange de la dispersion aqueuse avec un second tensioactif externe afin de préparer une dispersion mélangée, la dispersion mélangée possédant une stabilité au cisaillement améliorée comparativement à la dispersion aqueuse et le second tensioactif étant anionique et différent du premier tensioactif ; et
(c) l'application de la dispersion mélangée sur un substrat pour former un film.

8. Film selon la revendication 7, dans lequel le premier et le second tensioactifs sont choisis dans le groupe constitué par le dodécylbenzène sulfonate de sodium, le dodécyl sulfonate de sodium, l'(oxyde de dodécyle et de diphényle)disulfonate de sodium, l'(oxyde de n-décyle et de diphényle)disulfonate de sodium, le dodécylbenzènesulfonate d'isopropylamine, le laurylsulfate de triéthanolamine ou l'(oxyde d'hexyle et de diphényle)disulfonate de sodium.

9. Film selon la revendication 7, dans lequel l'étape (c) du procédé de préparation du film comprend l'immersion du substrat dans la dispersion mélangée, la coagulation thermique, la coulée ou le dépôt par électrolyse de la dispersion sur le substrat, ou leur combinaison.

10. Film de polyuréthane selon l'une des revendications précédentes 7 à 9, dans lequel le film obtenu est en forme de gant, de préservatif, de ballonnet d'angioplastie, de poche médicale, de tube médical ou de cathéter.

11. Dispersion de polyuréthane possédant une stabilité au cisaillement améliorée, la dispersion comprenant :
(a) un prépolymère non ionique de polyuréthane et un premier tensioactif externe dispersé dans de l'eau, le prépolymère étant préparé à partir d'un diisocyanate et d'un matériau contenant de l'hydrogène actif et le premier tensioactif comprenant un tensioactif anionique ; et
(b) un second tensioactif externe ajouté ensuite, le second tensioactif étant anionique et différent du premier tensioactif,
dans laquelle la dispersion de polymère possède une stabilité au cisaillement améliorée comparativement à une dispersion comprenant le composant (a), mais n'ayant pas de second tensioactif externe ajouté ensuite.

12. Dispersion de polyuréthane selon la revendication 11, dans laquelle le premier et le second tensioactifs sont choisis dans le groupe constitué par le dodécylbenzènesulfonate de sodium, le dodécyl sulfonate de sodium, l'(oxyde de dodécyle et de diphényle)disulfonate de sodium, l'(oxyde de n-décyle et de diphényle)disulfonate de sodium, le dodécylbenzènesulfonate d'isopropylamine, le laurylsulfate de triéthanolamine ou l'(oxyde d'hexyle et de diphényle)disulfonate de sodium.

13. Dispersion de polyuréthane selon la revendication 11 ou 12, dans laquelle la dispersion a une granulométrie de 0,9 micron à 0,05 micron.

14. Dispersion de polyuréthane selon l'une des revendications précédentes 11 à 13, dans laquelle la dispersion a une teneur en substances solides de 5 à 60 pour cent en poids.

15. Dispersion de polyuréthane selon l'une des revendications précédentes 11 à 14, dans laquelle le prépolymère est préparé à partir d'un diisocyanate comprenant du méthylène-diphénylisocyanate, du toluène-diisocyanate ou des mélanges de méthylène-diphénylisocyanate et de toluène-diisocyanate.

16. Dispersion de polyuréthane selon l'une des revendications précédentes 11 à 15, dans laquelle le prépolymère est préparé à partir d'un matériau contenant de l'hydrogène actif comprenant soit :
(a) un mélange d'un diol de poids moléculaire élevé et d'un diol de faible poids moléculaire ; soit
(b) un diol de poids moléculaire élevé,
à la condition que, si le matériau contenant de l'hydrogène actif ne comprend pas un diol de faible poids moléculaire, le prépolymère est dispersé dans de l'eau qui comprend un extenseur de chaîne de type amine difonctionnel.

17. Dispersion de polyuréthane selon l'une des revendications précédentes 11 à 16, dans laquelle la dispersion est coagulable sur un substrat.

18. Dispersion de polyuréthane selon la revendication 16, dans laquelle le prépolymère est préparé à partir d'un diol de poids moléculaire élevé comprenant un polyoxypropylènediol ayant une terminaison oxyde d'éthylène de 0 à 25 pour cent en poids et un extenseur de chaîne de type amine difonctionnel comprenant au moins un d'un polyéther diol aminé, de la pipérazine, de l'aminoéthyléthanolamine, de l'éthanolamine et de l'éthylènediamine.

19. Dispersion de polyuréthane selon la revendication 16, dans laquelle le prépolymère est préparé à partir d'un diol de poids moléculaire élevé comprenant un polyoxypropylènediol ayant une terminaison oxyde d'éthylène de 0 à 25 pour cent en poids et un diol de faible poids moléculaire comprenant au moins un d'un polyoxypropylènediol, du propylène glycol ou du diéthylène glycol.

20. Dispersion de polyuréthane selon l'une des revendications précédentes 11 à 19, dans laquelle le prépolymère est préparé également à partir d'un polyéther monoalcool, le monoalcool étant compris dans le prépolymère en une quantité de 0,1 à 0,99 pour cent en poids.

21. Dispersion de polyuréthane possédant une stabilité au cisaillement améliorée, la dispersion consistant essentiellement en
(a) un prépolymère non ionique de polyuréthane et un premier tensioactif externe dispersé dans de l'eau, le prépolymère étant préparé à partir d'un diisocyanate et d'un matériau contenant de l'hydrogène actif et le premier tensioactif comprenant un tensioactif anionique ; et
(b) un second tensioactif externe ajouté ensuite, le second tensioactif étant différent du premier tensioactif, dans laquelle la dispersion de polyuréthane possède une stabilité au cisaillement améliorée comparativement à une dispersion ayant le composant (a) mais n'ayant pas de second tensioactif externe ajouté ensuite.
